# EUROPÄISCHE PATENTSCHRIFT

(11) **EP 0 779 849 B1**
(45) Veröffentlichungstag und Bekanntmachung des Hinweises auf die Patenterteilung: **07.10.1998**
(21) Anmeldenummer: 95925848.4
(22) Anmeldetag: 08.07.1995
(51) Int. Cl.: B23B 49/00, B23Q 17/22, G01B 5/10, G01B 7/12, G01B 11/08

(54) **VERFAHREN UND VORRICHTUNG ZUR ERFASSUNG UND KOMPENSATION VON FÜGE- UND VERSCHLEISSFEHLERN BEIM FEINBOHREN**
PROCESS AND DEVICE FOR DETECTING AND COMPENSATING FOR JOINTING AND WEAR ERRORS IN FINE DRILLING
PROCEDE ET DISPOSITIF PERMETTANT DE DETECTER ET DE CORRIGER DES DEFAUTS DE JOINTURE ET DES DEFAUTS DUS A L'USURE DE L'OUTIL LORS D'OPERATIONS DE PERCAGE DE PRECISION

(30) Priorität: 07.09.1994 DE 4431845
(43) Veröffentlichungstag der Anmeldung: 25.06.1997
(73) Patentinhaber: KOMET Präzisionswerkzeuge Robert Breuning GmbH, D-74354 Besigheim (DE)
(72) Erfinder: STAHL, Frank, D-71385 Pleidelsheim (DE)
(74) Vertreter: Wolf, Eckhard, Dr.-Ing.
(86) Internationale Anmeldenummer: EP9502661
(87) Internationale Veröffentlichungsnummer: WO9607500

(56) Entgegenhaltungen:
- EP-A- 0 043 920
- EP-A- 0 305 955
- WO-A-95/16543
- DE-A- 4 227 730
- DE-A- 4 314 295
- US-A- 4 507 850
- US-A- 4 590 580

## Beschreibung

Die Erfindung betrifft ein Verfahren und eine Vorrichtung zur Erfassung und/oder Kompensation von Füge- und Verschleißfehlern beim Feinbohren von Werkstücken mittels eines an einer Maschinenspindel einspannbaren, eine radial verstellbare Schneidplatte tragenden Verstellwerkzeugs gemäß dem Oberbegriff der Patentansprüche 1 und 9 und wie aus EP-A-305 955 bekannt.

Bei der Bearbeitung von Werkstücken in Bearbeitungszentren werden, begonnen vom Vollbohren bis zum Feinbohren, mehrere Arbeitsgänge nacheinander ausgeführt. Die hierfür benötigten Werkzeuge werden überwiegend automatisch gewechselt. Beim Werkzeugwechsel entstehen mehr oder weniger große, statistisch auftretende Fügefehler, die auf verschiedene Ursachen zurückzuführen sind:
- Beim Anschließen des Werkzeugs an die Schnittstelle der Maschinenspindel kann ein Achsversatz und/oder ein Winkelfehler (Verkippen) zwischen der Maschinenachse und Achse des Verstellwerkzeugs auftreten.
- Derartige Achs- bzw. Winkelfehler können sich ebenso an weiteren Trennstellen des Werkzeugs ergeben.
- Verschmutzungen an Schnitt- und Trennstellen stellen eine weitere Fehlerquelle dar.
- Beim Einspannen der Schneidplatten im Plattensitz bzw. der Schneidkörper in ihren Aufnahmetaschen können Einspannfehler auftreten.

Hinzu kommen systematische Verschleißfehler, die zu einer allmählichen Reduzierung des Bohrdurchmessers führen. Vor allem bei weichen Werkstücken kann es zu einer Aufbauschneidenbildung kommen, die auf ein Aufschweißen von Metallpartikeln auf die Schneide beim Bearbeitungsvorgang unter Bildung einer dadurch veränderten Schneidengeometrie zurückzuführen ist. Hinzu kommen fatale Fehler, wie Schneidenbruch und Nichtvorhandensein oder Lösen der Schneidplatten von den Werkzeugteilen, die einen Werkzeugaustausch erforderlich machen.

All diese Fehler führen zu Abweichungen im Bohrungsdurchmesser einerseits und in der Bohrungsqualität andererseits. Es war bisher nicht ohne weiteres möglich, diese Fehler vor dem eigentlichen Bearbeitungsvorgang zu erkennen. Dies gilt insbesondere für Füge- und Toleranzfehler, die gewisse Genauigkeitsschranken nicht überschreiten. Diese Fehler waren erst bei Kontrollen der Bohrergebnisse (Post-Prozeß-Kontrollen) beispielsweise mit Hilfe von Meßfühlern zur unmittelbaren Werkstückvermessung erkennbar und führten zu unerwünschtem Ausschuß.

Weiter ist es bei Feinverstellköpfen an sich bekannt (EP-B 0 491 724), die Werkzeugschneide zur Einstellung eines vorgegebenen, innerhalb eines Toleranzfeldes liegenden Bohrungsdurchmessers entweder von Hand oder beispielsweise mittels eines Verstellmotors radial am Werkzeugkopf zu verstellen. Durch die statistisch auftretenden Fügefehler konnte vor allem in Bearbeitungszentren die potentielle Genauigkeit der Feinverstellköpfe nicht ausgeschöpft werden.

Ausgehend hiervon liegt der Erfindung die Aufgabe zugrunde, ein Verfahren und eine Vorrichtung zu entwickeln, womit beim Feinbohren eine präprozessuale Erkennung und Kompensation von statistischen Fügefehlern und Verschleißfehlern möglich ist.

Zur Lösung dieser Aufgabe werden die in den Patentansprüchen 1 und 13 angegebenen Merkmalskombinationen vorgeschlagen. Vorteilhafte Ausgestaltungen und Weiterbildungen der Erfindung ergeben sich aus den Unteransprüchen.

Die erfindungsgemäße Lösung geht von dem Gedanken aus, daß der Flugkreisdurchmesser einer radial am weitesten außen liegenden Schneidkante der Schneidplatte am eingespannten Verstellwerkzeug gemessen und für Nachstellzwecke innerhalb des Verstellwerkzeugs ausgewertet wird, bevor eine Feinbohrung oder eine Feinbohrungsserie mit dem Verstellwerkzeug ausgeführt wird. Zur Bestimmung des Flugkreisdurchmessers werden zweckmäßig die Tangentenpositionen an zwei einander diametral gegenüberliegenden Stellen des Flugkreises der um die Spindelachse umlaufenden Schneidkante gemessen und in eine Abstandsbeziehung zueinander oder bezüglich ortsfester Nullagen gesetzt. Die Tangentenpositionen können dabei durch Verschiebewegmessungen an zwei zueinander parallelen, bezüglich der Drehachse der Maschinenspindel einander diametral gegenüberliegenden, unter der Einwirkung der vorbeidrehenden Schneidkante quer zur Drehachse verschiebbaren Tastflächen gemessen werden, wobei zur Vermeidung einer Beschädigung der Tastfläche das Verstellwerkzeug entgegen der Schneidrichtung seiner Schneidplatte an der Tastfläche vorbeigedreht werden sollte.

Grundsätzlich ist es auch möglich, die Tangentenpositionen berührungsfrei, vorzugsweise durch Laserstrahlabtastung der vorbeidrehenden Schneidkante in Tangentenrichtung zu erfassen.

Die bei der Erfassung des Flugkreisdurchmessers festgestellten Fehler können von Hand oder automatisch dadurch kompensiert werden, daß der gemessene Flugkreisdurchmesser mit einem an einen vorgegebenen Bohrungsdurchmesser angepaßten Sollwert verglichen wird und daß die Schneidplatte am Verstellwerkzeug nach Maßgabe der ermittelten Istwert/Sollwertabweichung radial, vorzugsweise um die halbe Abweichungsstrecke richtungsgerecht verstellt wird. Zur vollautomatischen Kompensation können die gemessenen Tangentenpositionen in einem Rechner durch Istwert/Sollwertvergleich ausgewertet und zur Nachstellung eines die Schneidplatte tragenden Verstellmechanismus vorzugsweise drahtlos, z.B. über eine Infrarot-Datenübertragungsstrecke an das Verstellwerkzeug übertragen werden.

Um auch den allmählichen Verschleiß der Schneidplatten erfassen und kompensieren zu können, wird gemäß einer vorteilhaften Ausgestaltung der Erfindung der Flugkreisdurchmesser im Verlauf einer Bohrungsserie mehrmals nachgemessen und für Nachstell- und/oder Registrierungszwecke ausgewertet. Damit lassen sich auch statistische Qualitätskontrollen bzw. Verschleißüberwachungen durchführen.

Vor der Durchführung einer ersten Feinbohrung wird zweckmäßig eine Testbohrung in ein Probewerkstück eingebracht und zur Kalibrierung des Sollwerts für den späteren Istwert/Sollwertvergleich vermessen. Im Verlauf einer Bohrungsserie, insbesondere vor oder nach einer Nachmessung oder Nachstellung des Flugkreisdurchmessers können dazuhin die in die Werkstücke oder in ein Probewerkstück eingebrachten Bohrungen stichprobenweise vermessen und zur Nachkalibrierung des Sollwerts ausgewertet werden.

Beim Auftreten fataler Fehler, die beispielsweise an einem Unter- oder Überschreiten eines vorgegebenen Toleranzbereichs (Eingriffsgrenzen) im gemessenen Flugkreisdurchmesser erkannt werden können, kann der Bearbeitungsvorgang unter Abgabe einer Fehlermeldung gesperrt werden.

Bei einer bevorzugten Vorrichtung zur Durchführung des erfindungsgemäßen Verfahrens ist im Einsatzbereich des Verstellwerkzeugs eine Meßanordnung gestellfest angeordnet, mit der der Flugkreisdurchmesser einer radial außen liegenden Schneidkante der Schneidplatte des an der Maschinenspindel eingespannten und um deren Achse rotierenden Verstellwerkzeugs bestimmbar ist. Die Meßanordnung weist dabei zweckmäßig zwei im Abstand voneinander angeordnete Sensoren oder Meßtaster zur Erfassung der gestellbezogenen Positionen zweier einander diametral gegenüberliegender, zueinander paralleler Tangenten an den Flugkreis der um die Spindelachse umlaufenden äußeren Schneidplattenkante auf. Hierzu sind zweckmäßig zwei an ihren Tastflächen einander zugewandte und zueinander planparallele Tastköpfe vorgesehen, die in je einer gestellfesten Schubführung nach entgegengesetzten Seiten entgegen der Kraft einer Rückstellfeder begrenzt verschiebbar und mit einem den Verschiebeweg erfassenden Wegmeßsystem verbunden sind, wobei zwischen den Tastköpfen ein Freiraum zur Aufnahme des die Schneidplatte tragenden Teils des an der Maschinenspindel eingespannten Verstellwerkzeugs mit parallel zu den Testflächen ausgerichteter Spindelachse angeordnet ist. Der Freiraum ist dabei so zu bemessen, daß der Abstand zwischen den Tastflächen kleiner als der Flugkreisdurchmesser, aber größer als der Durchmesser eines die Schneidplatte tragenden Schaftes ist. Um eine Beschädigung der Tastköpfe zu vermeiden, ist das in den Freiraum eingreifende Verstellwerkzeug in einer der Schneidrichtung entgegengesetzten Richtung um die Spindelachse drehbar.

Die Wegmeßsysteme enthalten zweckmäßig einen induktiven, kapazititven oder optischen Meßgeber und vorzugsweise einen Analog/Digitalwandler für den Anschluß an eine I/O-Karte eines Rechners. Zur vollautomatischen Kompensation von Füge- und Verschleißfehlern wird zweckmäßig ein Verstellwerkzeug verwendet, das besipielsweise einen motorisch antreibbaren, vorzugsweise drahtlos mit dem Rechner kommunizierenden Verstellmechanismus für die Schneidplatte aufweist. Das Verstellwerkzeug kann beispielsweise als Feinverstell-Bohrkopf oder als Plandrehkopf ausgebildet sein.

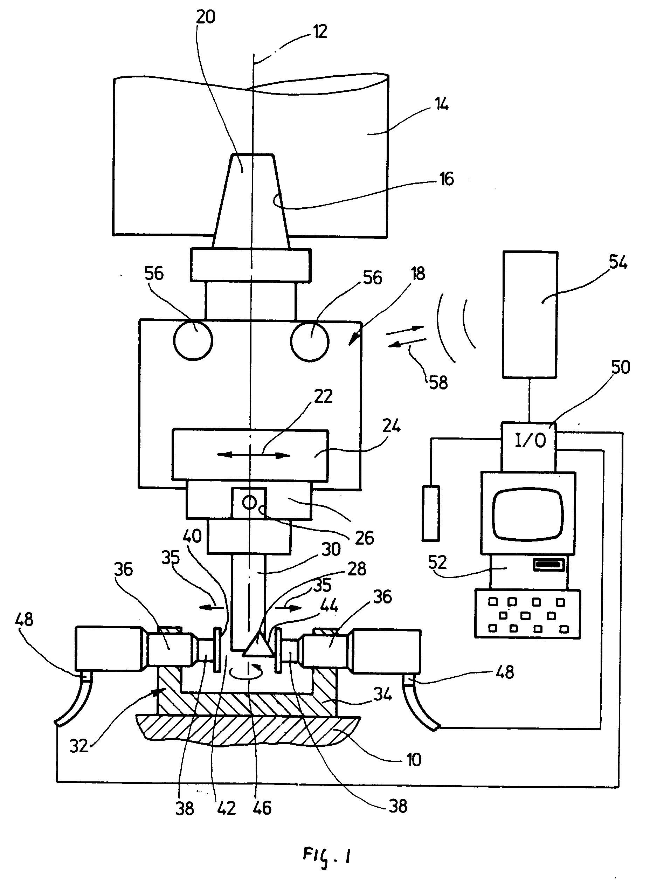

Im folgenden wird die Erfindung anhand eines in der Zeichnung schematisch dargestellten Ausführungsbeispiels näher erläutert. Die einzige Figur zeigt ein Schema einer Vorrichtung zur Messung und automatischen Kompensation von Füge- und Verschleißfehlern in einem zum Feinbohren bestimmten Feinverstellkopf.

Die Zeichnung zeigt einen Ausschnitt aus einem Bearbeitungszentrum 10 mit einer innerhalb des Bearbeitungszentrums 10 heb- und senkbaren sowie verschiebbaren, um die Spindelachse 12 drehbaren Maschinenspindel 14, an deren Werkzeugaufnahme 16 Maschinenwerkzeuge 18 mittels eines bei dem gezeigten Ausführungsbeispiel einen Steilkegel 20 umfassenden Spannmechanismus einspannbar sind. Das Bearbeitungswerkzeug 18 ist ein Feinverstell-Bohrkopf, der einen motorisch in Richtung des Doppelpfeils 22 verschiebbaren Schieber 24 mit einer Werkzeugaufnahme 26 für eine mit einer Schneidplatte 28 bestückte Bohrstange 30 aufweist. Beim Anschluß des Bohrkopfs 18 in der Steilkegelaufnahme 16 der Maschinenspindel 14 und beim Anschluß der Bohrstange 30 in der Aufnahme 26 des Verstellkopfs 18 kann es zu Fügefehlern kommen, die sich in einer Lageveränderung der Schneidplatte 28 gegenüber der Spindelachse 12 und damit in einer Veränderung des damit erzeugten Bohrungsdurchmessers auswirken kann. Auch der allmähliche Verschleiß der Schneidplatte 28 kann zu Fehlern im Bohrungsdurchmesser führen. Des weiteren können fatale Fehler durch Bruch oder Lösen der Schneidplatte 28 auftreten.

Um Fehler dieser Art erfassen und gegebenenfalls mit dem ohnehin vorhandenen Verstellmechanismus 24 kompensieren zu können, ist im Einsatzbereich des an der Spindel 14 eingespannten Werkzeugs 18 eine Meßvorrichtung 32 angeordnet, die einen gestellfesten Halter 34 und zwei an den U-Schenkeln des Halters 34 in Richtung der Pfeile 35 in gestellfesten Schubführungen 36 entgegen der Kraft einer nicht dargestellten Feder begrenzt verschiebbare Meßtaster 38 aufweist. Die Taster 38 sind an ihren einander zugewandten Tastflächen 40 parallel zueinander ausgerichtet und begrenzen dort einen Freiraum 42, in den das Verstellwerkzeug 18 mit seiner Bohrstange 30 und der Schneidplatte 28 von oben her eintauchbar ist. Der Freiraum 42 ist in der innersten Endstellung der Taster 38 so bemessen, daß der Abstand zwischen den Tastflächen 40 größer als der Durchmesser der Bohrstange 28, aber kleiner als der Flugkreisdurchmesser der äußersten Schneidkante 44 der Schneidplatte 38 bei um die Spindelachse 12 in Richtung des Pfeils 46 drehendem Werkzeug ist. In jeder Schubführung 36 befindet sich ein nicht dargestelltes, vorzugsweise induktives Wegmeßsystem, mit welchem die Verschiebelage des Tasters 38 gemessen und in Form elektrischer Positionssignale an den Ausgängen 48 abgegriffen werden kann. Die Taster 38 werden beim Drehen des Werkzeugs 18 entgegen der Schneidrichtung der Schneide 28 durch die Außenkante 44 der vorbeidrehenden Schneidplatte in Richtung der Pfeile 35 entgegen der Kraft der Rückstellfeder nach außen verschoben und anschließend durch die Rückstellfeder wieder nach innen mitgenommen. Auf diese Weise erhält man in der maximalen Verschiebeposition der Taster 38 die Positionen zweier einander diametral gegenüberliegender Tangenten an den Flugkreis der äußersten Schneidplattenkante 44, woraus sich durch Differenzbildung ein Maß für den Flugkreisdurchmesser ergibt. Mit einer entsprechend intelligenten Sensorelektronik können die Positionsmaße der Taster 38 bereits so weit ausgewertet werden, daß an den Ausgängen 48 nur die Maximalpositionen der Taster 38 in digitaler Form ausgegeben werden.

Die Ausgänge 48 der Taster 38 sind bei dem gezeigten Ausführungsbeispiel über eine I/O-Karte 50 an einen Rechner 52 gelegt, in welchem die Positionsdaten über ein geeignetes Programm in Steuerdaten für den Verschiebemechanismus 24 des Verstellkopfs 18 umgesetzt werden. Für die Datenübertragung vom Rechner 52 zum Verstellkopf 18 sind ein rechnerseitiger Senderempfänger 54 und ein verstellkopfseitiger Senderempfänger 56 vorgesehen, die über eine Infrarot-Datenübertragungsstrecke 58 kommunizieren. Die über die Infrarotstrecke 58 übertragenen Signale werden zur Fernbedienung des Verstellmechanismus 24 eingesetzt. Der Verstellmechanismus 24 enthält seinerseits ein internes Wegmeßsytem, dessen Meßdaten über die Infrarotstrecke 58 zur direkten Wegmessung und Regelung der Verschiebebewegung des Verstellmechanismus 24 zum Rechner zurückübertragen werden.

Grundsätzlich ist es bei einem Verstellmechanismus ohne internes Wegmeßsystem möglich, die Verschiebe- bzw. Nachstellbewegung dadurch zu regeln, daß während des Nachstellvorgangs die momentanen Istwerte der Verschiebelage mittels der Meßvorrichtung 32 sequentiell erfaßt werden und der Verstellmechanismus zur Korrektur der jeweiligen Ist/Sollwertdifferenz betätigt wird.

Mit der beschriebenen Anordnung ist es möglich, die beim Einspannen des Meßkopfs 18 und der Bohrstange 30 auftretenden Fügefehler sowie die Verschleißfehler der Schneidplatte 28, mit der Meßvorrichtung 32 zu erfassen und über den Verstellmechanismus 24 zu kompensieren.

Um eine Verschmutzung und dadurch bedingte Meßfehler zu vermeiden, wird die innerhalb des Bearbeitungszentrums befindlichen Meßvorrichtung 32 zweckmäßig in einem durch einen abnehmbaren Deckel oder durch eine Bürstenabdeckung verschließbaren Gehäuse angeordnet.

Zusammenfassend ist folgendes festzustellen: Die Erfindung bezieht sich auf ein Verfahren und eine Vorrichtung zur Erfassung und/oder Kompensation statistischer Füge- und Verschleißfehler beim Feinbohren von Werkstücken mittels eines an einer Maschinenspindel 14 einspannbaren, eine radial verstellbare Schneidplatte 28 tragenden Verstellwerkzeugs 18. Die Erfindung sieht vor, daß vor dem Einbringen einer Bohrung oder einer Bohrungsserie der Flugkreisdurchmesser einer radial außen liegenden Schneidkante 44 der Schneidplatte 28 am eingespannten Verstellwerkzeug bei drehender Maschinenspindel 14 gemessen und für Nachstellzwecke innerhalb des Verstellwerkzeugs 18 ausgewertet wird.

## Patentansprüche

1. Verfahren zur Erfassung und/oder Kompensation von Füge- und Verschleißfehlern beim Feinbohren von Werkstücken mittels eines an einer Maschinenspindel (14) einspannbaren, eine radial verstellbare Schneidplatte (28) tragenden Verstellwerkzeugs (18), bei welchem der Flugkreisdurchmesser einer radial außen liegenden Schneidkante (44) der Schneidplatte am eingespannten Verstellwerkzeug (18) bei drehender Maschinenspindel (14) gemessen und für Nachstellzwecke innerhalb des Verstellwerkzeugs (18) ausgewertet wird, bevor ein Bohrvorgang mit dem Verstellwerkzeug (18) ausgeführt wird, wobei zur Bestimmung des Flugkreisdurchmessers die Tangentenpositionen an zwei einander diametral gegenüberliegenden Stellen des Flugkreises der um die Spindelachse umlaufenden Schneidkante (44) gemessen und in eine Abstandsbeziehung zueinander oder bezüglich ortsfester Nullagen gesetzt werden, **dadurch gekennzeichnet**, daß die Tangentenpositionen durch Verschiebewegmessungen an zwei zueinander parallelen, bezüglich der Drehachse (12) der Maschinenspindel (14) einander diametral gegenüberliegenden, unter der Einwirkung der vorbeidrehenden Schneidkante (44) quer zur Drehachse (12) verschiebbaren Tastflächen (40) gemessen werden und daß das Verstellwerkzeug (18) entgegen der Schneidrichtung seiner Schneidplatte (28) an den Tastflächen (40) vorbeigedreht wird.

2. Verfahren nach Anspruch 1, **dadurch gekennzeichnet**, daß der gemessene Flugkreisdurchmesser mit einem an einen vorgegebenen Bohrungsdurchmesser angepaßten Sollwert verglichen wird, und daß die Schneidplatte (28) am Verstellwerkzeug nach Maßgabe der ermittelten Istwert/Sollwertabweichung radial, vorzugsweise um die halbe Abweichungsstrecke richtungsgerecht verstellt wird.

3. Verfahren nach Anspruch 1 oder 2, **dadurch gekennzeichnet**, daß die gemessenen Tangentenpositionen in einem Rechner (52) durch Istwert/Sollwertvergleich ausgewertet und nach entsprechender Signalumsetzung zur Nachstellung eines die Schneidplatte (44) tragenden Verstellmechanismus (24) vorzugsweise drahtlos beispielsweise über eine Infrarot-Datenübertragungsstrecke (54,56,58) an das Verstellwerkzeug (18) übertragen werden.

4. Verfahren nach einem der Ansprüche 1 bis 3, **dadurch gekennzeichnet**, daß der Flugkreisdurchmesser im Verlauf einer Bohrungsserie mindestens einmal nach-gemessen und für Nachstell- und/oder Registrierungszwecke ausgewertet wird.

5. Verfahren nach einem der Ansprüche 1 bis 4, **dadurch gekennzeichnet**, daß vor der Durchführung einer ersten Feinbohrung eine Testbohrung in ein Probewerkstück eingebracht und zur Kalibrierung des Sollwerts für den Ist/Sollwertvergleich vermessen wird.

6. Verfahren nach Anspruch 5, **dadurch gekennzeichnet**, daß im Verlauf einer Bohrungsserie insbesondere vor oder nach einer Nachmessung oder Nachstellung des Flugkreisdurchmessers die in die Werkstücke oder in ein Probewerkstück eingebrachten Bohrungen stichprobenweise vermessen werden.

7. Verfahren nach Anspruch 6, **dadurch gekennzeichnet**, daß der Sollwert für den Sollwert/Istwertvergleich nach Maßgabe von bei der Bohrungsvermessung auftretenden Maßabweichungen gegenüber einem vorgegebenen Bohrungsdurchmesser oder Bohrungsaufmaß nachkalibriert wird.

8. Verfahren nach einem der Ansprüche 1 bis 7, **dadurch gekennzeichnet**, daß bei Unter- oder Überschreiten eines vorgegebenen Toleranzbereichs im gemessenen Flugkreisdurchmesser der Bearbeitungsvorgang unter Abgabe einer Fehlermeldung abgebrochen wird.

9. Vorrichtung zur Bestimmung und/oder Kompensation statistischer Füge- und Verschleißfehler beim Feinbohren mittels eines an einer Maschinenspindel (14) einspannbaren, eine radial verstellbare Schneidplatte (28) tragenden Verstellwerkzeug (18), mit einer im Arbeitsraum des Verstellwerkzeugs (18) gestellfest angeordneten Meßanordnung (32) zur Bestimmung des Flugkreisdurchmessers einer radial außen liegenden Schneidkante (44) der Schneidplatte (28) des an der Maschinenspindel (14) eingespannten und um deren Achse (12) rotierenden Verstellwerkzeugs (18), **dadurch gekennzeichnet**, daß die Meßanordnung (32) zwei an ihren Tastflächen (40) einander zugewandte und zueinander parallele Meßtaster (38) aufweist, die in je einer gestellfesten Schubführung (36) nach entgegengesetzten Seiten 35) entgegen der Kraft einer Rückstellfeder begrenzt verschiebbar und mit einem den Verschiebeweg erfassenden Wegmeßsystem verbunden sind, und daß zwischen den Meßtastern (38) ein Freiraum (42) zur Aufnahme des die Schneidplatte (44) tragenden Teils des an der Maschinenspindel (14) eingespannten Verstellwerkzeugs (18) mit parallel zu den Tastflächen (40) ausgerichteter Spindelachse (12) angeordnet ist, und daß das in den Freiraum (42) eingreifende Verstellwerkzeug (18) in einer der Schneidrichtung entgegengesetzten Richtung (46) um die Spindelachse (12) drehbar ist.

10. Vorrichtung nach Anspruch 9, **dadurch gekennzeichnet**, daß der Freiraum (42) so bemessen ist, daß der Abstand zwischen den Tastflächen (40) kleiner als der Flugkreisdurchmesser aber größer als der Durchmesser eines die Schneidplatte (44) tragenden Schaftes (30) ist.

11. Vorrichtung nach Anspruch 9 oder 10, **gekennzeichnet durch** eine vorzugsweise rechnergestützte Auswerteschaltung (50,52) zur radialen Nachstellung der Schneidplatte (28) am Verstellwerkzeug (18) nach Maßgabe der Abweichung des gemessenen Flugkreisdurchmessers von einem einen vorgegebenen Bohrungsdurchmesser definierenden Sollwert.

12. Vorrichtung nach einem der Ansprüche 9 bis 11, **dadurch gekennzeichnet**, daß die Wegmeßsysteme einen induktiven, kapazitiven oder optischen Meßgeber und vorzugsweise einen Analog/Digitalwandler für den Anschluß an eine I/O-Karte (50) eines Rechners (52) aufweisen.

13. Vorrichtung nach Anspruch 12, **dadurch gekennzeichnet**, daß das Verstellwerkzeug (18) einen motorisch antreibbaren, vorzugsweise drahtlos durch den Rechner ansteuerbaren Verstellmechanismus (24) für die Schneidplatte (28) aufweist.

14. Vorrichtung nach einem der Ansprüche 9 bis 13, **dadurch gekennzeichnet**, daß das Verstellwerkzeug (18) als Feinverstell-Bohrkopf oder als Plandrehkopf ausgebildet ist.

## Claims

1. A process for detecting and/or compensating for jointing and wear errors in the fine drilling of workpieces by means of an adjusting tool (18) bearing a radially adjustable cutting insert (28) and capable of being clamped to a machine shaft (14), in which the diameter of the circle of travel of a radially outer cutting edge (44) of the cutting insert is measured on the clamped adjusting tool (18) with the machine shaft (14) rotating and evaluated within the adjusting tool (18) for adjustment purposes before a drilling process is executed with the adjusting tool (18), while for the purpose of determining the diameter of the circle of travel the positions of tangents at two diametrically opposite positions on the circle of travel of the cutting edge (44) rotating around the shaft axis are measured and set at a distance in relation to each other or to fixed zero positions, characterized by the fact that the positions of the tangents are found by measurements of displacement on two parallel contact surfaces (40) diametrically opposite to each other in relation to the axis (12) of the machine shaft (14) and capable of being moved transversely to the axis (12) by the action of the rotating cutting edge (44) and that the adjusting tool (18) is rotated past the contact surfaces (40) against the cutting direction of its cutting insert (28).

2. A process as in Claim 1, characterized by the fact that the measured diameter of the circle of travel is compared with a desired value fitted to a predetermined drilling diameter and that the cutting insert (28) on the adjusting tool is adjusted radially to the variation found between the actual and desired values preferably around half the extent of the variation and in the same direction.

3. A process as in Claims 1 or 2, characterized by the fact that the measured positions of the tangents are evaluated in a computer (52) by comparison of the actual and desired values and after appropriate conversion of the signal are sent to the adjusting tool (18) preferably by wireless transmission for example via an infrared data transmission path (54, 56, 58) for the purpose of effecting the adjustment of an adjusting mechanism (24) bearing the cutting insert (44).

4. A process as in one of Claims 1 through 3, characterized by the fact that the diameter of the circle of travel is at least once during a series of drillings rechecked and evaluated for the purposes of adjustment and/or recording.

5. A process as in one of Claims 1 through 4, characterized by the fact that before an initial fine drilling is performed a test drilling is made in a test piece and measured to permit calibration of the desired value for the purposes of the comparison between actual and desired values.

6. A process as in Claim 5, characterized by the fact that during a series of drillings and especially before or after a recheck or readjustment of the diameter of the circle of travel sample measurements are taken of the drillings made in the workpieces or in a test piece.

7. A process as in Claim 6, characterized by the fact that the desired value is recalibrated for the purposes of the comparison between actual and desired values in accordance with the variations from a predetermined drilling diameter or drilling overmeasure found by measuring the drillings.

8. A process as in one of Claims 1 through 7, characterized by the fact that if a predetermined tolerance range in the measured diameter of the circle of travel is not met or is exceeded an error message appears and machining is blocked.

9. A device for determining and/or compensating for statistical jointing and wear errors in fine drilling by means of an adjustment tool (18) bearing a radially adjustable cutting insert (28) and capable of being clamped to a machine shaft (14), with a measurement apparatus (32) fixed to the frame in the operating area of the adjusting tool (18) for the purpose of determining the diameter of the circle of travel of a radially outer cutting edge (44) of the cutting insert (28) of the adjusting tool (18) clamped to the machine shaft (14) and rotating around its axis (12) characterized by the fact that the measuring apparatus (32) has two parallel feelers (38) facing each other at their contact surfaces (40) each of which is capable of limited movement in a slide (36) fixed to the frame to opposite sides against the force of a reverse spring and is connected to an path--measuring system which finds the path of displacement, and that between the feelers (38) there is a clear space (42) for receiving the part of the adjusting tool (18) clamped to the machine shaft (14) which bears the cutting insert (44), the shaft axis (12) being set parallel to the contact surfaces (40), and that the adjusting tool (18) which engages in the clear space (42) can be rotated around the shaft axis (12) in a direction (46) opposite to the cutting direction.

10. A device as in Claim 9, characterized by the fact that the dimensions of the clear space (42) are such that the distance between the contact surfaces (40) is smaller than the diameter of the circle of travel but larger than the diameter of a shaft (30) bearing the cutting insert (44).

11. A device as in Claim 9 or 10, characterized by an evaluation control (50, 52), preferably computer-supported, for the purposes of radial adjustment of the cutting insert (28) on the adjusting tool (18) to the variation of the measured diameter of the circle of travel from a desired value defining a predetermined drilling diameter.

12. A device as in one of Claims 9 through 11, characterized by the fact that the path-measuring systems have an inductive, capacitive or optical gauge and preferably an analog/digital converter for connection to an I/O card (50) of a computer (52).

13. A device as in Claim 12, characterized by the fact that the adjusting tool (18) has an adjustment mechanism (24) for the cutting insert (28) which can be mechanically powered and is preferably subject to wireless control from the computer.

14. A device as in one of Claims 9 through 13, characterized by the fact that the adjusting tool (18) takes the form of a finely adjustable drill head or a facing head.

## Revendications

1. Procédé de détection et/ou de correction des erreurs de jonction et d'usure lors de l'alésage de précision de pièces au moyen d'un outil réglable (18) monté sur une broche de machine (14) et portant une plaquette coupante mobile radialement (28), dans lequel le diamètre de la trajectoire circulaire d'une arête coupante située radialement à l'extérieur (44) de la plaquette est mesuré sur l'outil réglable (18) monté et avec la broche de machine (14) en rotation et exploité aux fins de réajustement dans l'outil réglable (18) avant l'exécution d'une opération d'alésage avec celui-ci, et pour la détermination du diamètre de la trajectoire circulaire, les positions des tangentes à deux endroits diamétralement opposés de la trajectoire circulaire de l'arête coupante (44) tournant autour de l'axe de la broche sont mesurées et mises en une relation de distance entre elles ou par rapport à des positions zéro fixes, caractérisé par le fait que les positions des tangentes sont mesurées par des mesures de déplacement sur deux surfaces palpeuses parallèles (40) diamétralement opposées par rapport à l'axe de rotation (12) de la broche de machine (14) et mobiles perpendiculairement à cet axe (12) sous l'action de l'arête coupante (44) qui passe devant en tournant, et qu'on fait passer l'outil réglable (18) devant les surfaces palpeuses (40) en le faisant tourner dans le sens inverse du sens de coupe de sa plaquette coupante (28).

2. Procédé selon la revendication 1, caractérisé par le fait que le diamètre mesuré de la trajectoire circulaire est comparé avec une valeur prescrite adaptée à un diamètre fixé d'alésage, et que la plaquette coupante (38) est déplacée radialement dans le sens convenable sur l'outil réglable d'après l'écart valeur instantanée/valeur prescrite trouvé, de préférence de la moitié de la distance d'écart.

3. Procédé selon l'une des revendications 1 et 2, caractérisé par le fait que les positions mesurées des tangentes sont exploitées dans un ordinateur (52) par comparaison valeur instantanée/valeur prescrite et, après conversion appropriée de signal, sont, pour le réajustement d'un mécanisme de réglage (24) portant la plaquette coupante (44), transmises à l'outil réglable (18) de préférence sans fil, par exemple par une voie de transmission de données infrarouge (54, 56, 58).

4. Procédé selon l'une des revendications 1 à 3, caractérisé par le fait que le diamètre de la trajectoire circulaire est remesuré au moins une fois au cours d'une série d'alésages et exploité aux fins de réajustement et/ou d'enregistrement.

5. Procédé selon l'une des revendications 1 à 4, caractérisé par le fait qu'avant l'exécution d'un premier alésage de précision, un alésage d'essai est exécuté dans une pièce d'essai et mesuré pour le calibrage de la valeur prescrite pour la comparaison valeur instantanée/valeur prescrite.

6. Procédé selon la revendication 5, caractérisé par le fait qu'au cours d'une série d'alésages, en particulier avant ou après une nouvelle mesure ou un réajustement du diamètre de la trajectoire circulaire, les alésages exécutés dans les pièces ou dans une pièce d'essai sont mesurés sur des pièces prises au hasard.

7. Procédé selon la revendication 6, caractérisé par le fait que la valeur prescrite pour la comparaison valeur prescrite/valeur instantanée est recalibrée d'après les écarts dimensionnels apparus lors de la mesure d'alésages par rapport à un diamètre fixé d'alésage ou une surcote fixée d'alésage.

8. Procédé selon l'une des revendications 1 à 7, caractérisé par le fait qu'en cas de dépassement par valeurs inférieures ou supérieures d'une zone de tolérances fixée pour le diamètre mesuré de la trajectoire circulaire, l'opération d'usinage est arrêtée avec émission d'un signal d'erreur.

9. Dispositif pour la détermination et/ou la correction des erreurs fortuites de jonction et des erreurs d'usure lors de l'alésage de précision au moyen d'un outil réglable (18) monté sur une broche de machine (14) et portant une plaquette coupante (28) mobile radialement, comportant un dispositif de mesure (32) placé, solidaire du bâti, dans le champ de travail de l'outil réglable (18) et destiné à la détermination du diamètre de la trajectoire circulaire d'une arête coupante située radialement à l'extérieur (44) de la plaquette coupante (28) de l'outil réglable (18) monté sur la broche de machine (14) et tournant autour de l'axe (12) de celle-ci, caractérisé par le fait que le dispositif de mesure (32) présente deux palpeurs de mesure (38) dont les surfaces palpeuses (40) sont dirigées l'une vers l'autre et parallèles et qui sont mobiles de façon limitée, chacun dans un guidage de coulissement (36) solidaire du bâti, vers des côtés opposés (35) contre l'action d'un ressort de rappel, et reliés à un système de mesure de déplacements qui mesure le déplacement, et qu'entre les palpeurs de mesure (38) se trouve un espace libre (42) destiné à recevoir la partie portant le plaquette coupante (44) de l'outil réglable (18) monté sur la broche de machine (14), avec l'axe (12) de la broche parallèle aux surfaces palpeuses (40), et que l'outil réglable (18) s'engageant dans cet espace libre (42) peut tourner autour de l'axe (12) de la broche dans le sens (46) inverse du sens de coupe.

10. Dispositif selon la revendication 9, caractérisé par le fait que l'espace libre (42) est dimensionné de façon que la distance entre les surfaces palpeuses (40) soit inférieure au diamètre de la trajectoire circulaire, mais supérieure au diamètre d'une barre (30) portant la plaquette coupante (44).

11. Dispositif selon l'une des revendications 9 et 10, caractérisé par un circuit d'exploitation (50, 52) de préférence assisté par ordinateur pour le réajustement radial de la plaquette coupante (28) sur l'outil réglable (18) d'après l'écart du diamètre mesuré de la trajectoire circulaire d'une valeur prescrite définissant un diamètre fixé d'alésage.

12. Dispositif selon l'une des revendications 9 à 11, caractérisé par le fait que les systèmes de mesure de déplacements présentent un transducteur de mesure inductif, capacitif ou optique et de préférence un convertisseur analogique-numérique pour le raccordement à une carte d'entrée-sortie (50) d'un ordinateur (52).

13. Dispositif selon la revendication 12, caractérisé par le fait que l'outil réglable (18) présente un mécanisme de réglage (24) pour la plaquette coupante (28) qui est actionné par moteur et commandé de préférence sans fil par l'ordinateur.

14. Dispositif selon l'une des revendications 9 à 13, caractérisé par le fait que l'outil réglable (18) est une tête d'alésage à réglage de précision ou une tête de surfaçage.
